# EUROPEAN PATENT APPLICATION

(11) **EP 1 245 269 A1**
(43) Date of publication of application: **02.10.2002**
(21) Application number: 02006631.2
(22) Date of filing: 25.03.2002
(51) Int. Cl.: B01F 13/10, A61J 3/00, G07F 13/06, A61K 7/00

(54) **Method for preparing and selling liquid cosmetics in a custom-made manner**

(30) Priority: 26.03.2001 JP 2001088412
(71) Applicant: Matsumoto, Mitsuo, Yokohama-shi, Kanagawa-ken (JP)
(72) Inventor: Matsumoto, Mitsuo, Yokohama-shi, Kanagawa-ken (JP); Suzuki, Yasuo, Yachimata-shi, Chiba-ken (JP); Nakayama, Kunisuke, Yokohama-shi, Kanagawa-ken (JP); Yamanobe, Keiko, Shinjuku-ku, Tokyo (JP)
(74) Representative: Klingseisen, Franz, Dipl.-Ing.

(57) **Abstract**

Cosmetics suitable for the skin condition, feelings or tastes of respective consumers are rapidly and easily prepared for selling. Plural kinds of stock solutions of cosmetics, which respectively include a plurality of ingredients of raw materials of cosmetics and which have different functions or characteristics, are manufactured in advance, the plural kinds of stock solutions of cosmetics are stored in containers of respective stock solutions, a quantitative filler is controlled by a controller and an amount of the stock solutions of cosmetics are measured and supplied to fill in sales containers at a compounding ratio requested by a consumer from the respective containers of stock solutions so that the total amount would be constant, a label indicating ingredients corresponding to the compounding ratio is attached to the sales container to sell the product. A perfumed solution suitable for a taste of a consumer can be added, if necessary.

## Description

### TECHNICAL FIELD OF THE INVENTION

The present invention relates to a method for preparing and selling liquid cosmetics in a custom-made manner, more particularly, a method according to which a consumer can easily purchase even a small amount of liquid cosmetics suitable for the skin condition or a taste of the consumer. This method is useful for preparing and selling liquid (that is, fluid) cosmetics such as lotions, cosmetic liquids, milky lotions, shampoos, and hair tonics.

### BACKGROUND OF THE INVENTION

Cosmetics are regulated by and manufactured in accordance with the Pharmaceutical Affairs Law, and should be marked with predetermined indication. Conventionally, cosmetics factories have been required to get prior admission of or allowance for (or to submit a notice of, in the case of products comprising only classifically allowed ingredients) manufacturing for every item to be manufactured. Under this condition, cosmetics, at present, are manufactured in a predetermined cosmetics factory so as to have a predetermined ratio of necessary ingredients of raw materials of the cosmetics, filled in a sales container to which an indication label describing a predetermined items is attached, and then, put in a distribution route to be sold.

That is, cosmetics are manufactured in cosmetics factories as a finished product with conventional technology. In the factories, an average taste of consumers is estimated, and for the purpose of being suitable for the average taste, manufactured products whose kinds and ratio of ingredients of raw materials of cosmetics are prepared universally, or a plural kinds of product whose kinds and ratio of ingredients of raw materials of cosmetics are,prepared for every type of skin conditions.

Every person has his or her own skin condition and taste. The skin condition is now classified into sensitive, dried, oily, and mixed skins, but this classification is not definite. It is possible to some extent to prescribe for each skin condition, but the prescribed product must be completed as a different kind of cosmetics. The relation between the respective person's skin conditions and their tastes is not clear for the consumers. Thus, it is very difficult to obtain the cosmetics suitable for each consumer's skin condition and taste in a conventional manner. Further, in order to change the perfume in scent tone and/or concentration, the number of the kind of products should be increased since the scent tone and concentration of the perfume are fixed. Therefore, a large number of kinds of products should be supplied so as to satisfy the consumers more, which makes manufacture, distribution, sale, and stock control difficult, and thereby, causes a cost to be high.

There are already 3,600 or more kinds of raw materials of cosmetics in a current ingredient indication name list. In many cases, however, effects and characteristics of respective raw materials are similar one another. For example, there may be mentioned polyhydric alcohols such as glycerin, sorbitol, sodium pyrrolidonecarboxylate and polyethylene glycol, amino acids such as aspartic acid, isoleucine, glycine and proline, acid mucopolysaccharides such as sodium hyaluronate and chondroitin sulfate, various kinds of collagens or hydrolyzed collagen, elastin, sphingolipid (ceramide), nucleic acids such as ribonucleic acid, phospholipids such as lecithin, and many animal and vegetable ingredients having a moisturizing effect. As seen from the above, it is difficult to establish scientifically and logically clear prescription for compounding similar ingredients.

On the side of consumers using cosmetics, the skin condition is different in accordance with factors such as age, life environment, and heredity. Usually, the skin conditions are classified into oily, dried, and sensitive skins. Respective factors forming the skin condition, however, are so difficult to be analyzed that the skin conditions can not always be diagnosed and classified clearly and converted into a numeric value even when various kinds of measuring apparatus are used.

Under such conditions, for a consumer having a healthy skin without any particularly distinct symptom, it is required to provide cosmetics in which the skin condition, feeling and a taste specific to the consumer are much taken into account. It is almost impossible, however, to do so as described above in the conventional manner.

### SUMMARY OF THE INVENTION

An object of the present invention is to provide a method and apparatus capable of rapidly and easily preparing and selling one by one cosmetics suitable for the skin condition, feeling, and a taste of respective consumers.

Recently, the Pharmaceutical Affairs Law has been revised in Japan such that the cosmetics containing no undisclosure ingredients can be manufactured only with submission of a notice of a sales name on the manufacturer's own account, in principle, on and after the date of enforcement of the new regulation (March 31, 2000). Accordingly, in the case of compounding only ingredients listed on the ingredient indication name list of cosmetics, the composition and the amount of composition can be freely changed so long as the manufacturing record is maintained.

The present invention is proposed in view of such condition in manufacturing and selling cosmetics. That is, the invention provides a method for preparing and selling liquid cosmetics in a custom-made manner, comprising the steps of: manufacturing in advance plural kinds of stock solutions of cosmetics, which respectively include a plurality of ingredients of raw materials of cosmetics and which have different functions or characteristics; storing the plural kinds of stock solutions of cosmetics in containers of respective stock solutions; controlling a quantitative filler to meter the amount of the stock solutions of cosmetics at a compounding ratio requested by a consumer from the respective containers for stock solutions and filling sales containers with the metered solutions; attaching a label indicating ingredients corresponding to the compounding ratio; and selling the product.

The "liquid cosmetics" herein mean fluid cosmetics such as lotions, cosmetic liquids, milky lotions, shampoos, and hair tonics, which may be not only aqueous solutions but also suspensions or emulsions, including one having somewhat viscosity.

After the enforcement of the new regulation, it is obliged to indicate all compounded ingredients other than non-disclosure ingredients of cosmetics in order from the larger composition amount. For the purpose of answering it, all ingredients included in the stock solutions of cosmetics at a compounding ratio of the stock solutions are printed in order from the larger compounded amount on an ingredient indication label, which is attached to a sales container.

When a plurality of testing solutions having different compounding ratios of stock solutions of cosmetics are prepared for estimation of a consumer, a compounding ratio suitable for a taste of the consumer can be easily determined on the basis of the estimation.

Further, first compounding and preparing stock solutions with no perfume assigned and second adding a perfumed solution, which has plural kinds of scent tone and/or concentrations of perfume, to the prepared solution can produce liquid cosmetics having a perfume corresponding to a taste of a consumer. That is, several kinds of perfumed solutions are prepared in advance so that one having scent tone and a concentration of perfume suitable for a taste of a consumer would be selected in accordance with a request from the consumer or by practically using solutions, which are formed by assigning perfumes to the preceding testing solutions, and then, a perfumed solution prepared for composition is added to the stock solution compounded and filled in a sales container. The perfumed solution can be easily added by means of an injecting device capable of quantitative injection of around 1 to 2 ml of the solution, for example. Accordingly, liquid cosmetics suitable for selection in accordance with a taste of a consumer can be provided.

Further, the present invention provides an apparatus for preparing liquid cosmetics in a custom-made manner, comprising: a plurality of containers of stock solutions for storing stock solutions of cosmetics having different functions or characteristics; a tube-type rotary quantitative filler pumps respectively incorporated in a path for supplying a stock solution from each container of stock solution; a solution supplier located on a downstream side of the quantitative filler pumps for supplying a solution to a sales container; a controller for controlling an operation of respective quantitative filler pumps; and a computer supervising a system as a whole. The computer comprises: a storing unit for storing the composition of ingredients of respective stock solutions of cosmetics; a processor for calculating the amount of ingredients of raw materials of cosmetics to be included in accordance with a compounding ratio of stock solutions of cosmetics; an inputting unit for indicating a compounding ratio of stock solutions of cosmetics; and a printing unit for printing a label indicating included ingredients of raw materials of cosmetics in order from a larger amount.

In the apparatus, it is arranged that at least the containers of a stock solution, the rotary quantitative filler pumps and the solution supplier are installed in a clean space.

Moreover, this preparation apparatus may be arranged that the designated amount of the selected perfumed solution would be injected into a sales container by using a quantitative injector device different from a quantitative filler device of stock solution. The kind and amount of the perfumed solution are read into a computer in the above injection, so that the ingredients compounded in the perfumed solution would be also reflected in the indication of all ingredient as well as the kind and amount of the perfume.

### BRIEF DESCRIPTION OF THE DRAWINGS

Figure 1 is a flow diagram showing an example of the invention.
Figure 2 illustrates the interrelation between a compounding ratio and a function and characteristic of respective stock solutions.
Figure 3 is a block diagram showing an example of an apparatus according to the invention.
Figure 4 illustrates how to check the identity between a label and contents.
Figure 5 illustrates a relation between a compounding ratio of respective testing solutions and a compounding ratio of a product.

### BEST MODE FOR CARRYING OUT THE INVENTION

Stock solutions of cosmetics manufactured in advance include characteristic ingredients as a main material among a large number of raw materials of cosmetics, and have inherent functions (moisturizing, for example) and characteristics (viscosity, for example). Usually, two to five (or more, of course) kinds of stock solutions are prepared. In view of easy determination of a compounding ratio of stock solutions, it is preferred to prepare three to four kinds of stock solutions, in practice. A product comprising stock solutions of cosmetics compounded at an optional compounding ratio can be obtained by providing a quantitative filler means corresponding to a path for supplying a stock solution from each container of a stock solution to control the filling amount.

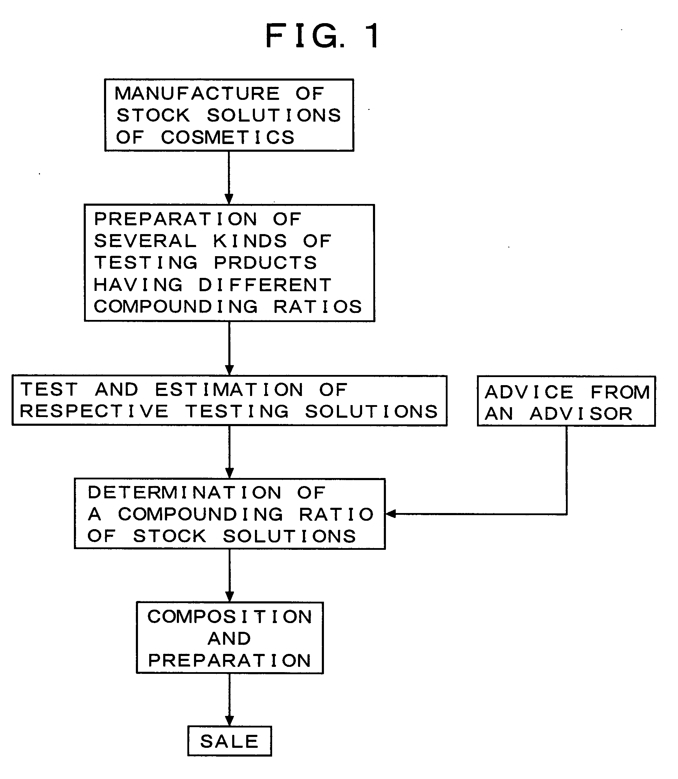

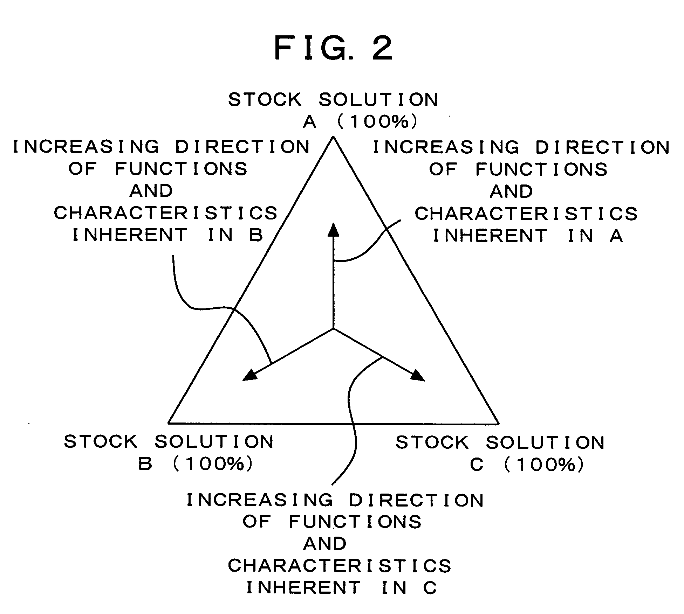

Figure 1 shows an example of a process of preparation sale. Three kinds of stock solutions of cosmetics A, B and C are used in Figure 1. In view of respective characteristics of the stock solutions of cosmetics A, B and C, the relation between their compounding ratio and their functions and characteristics is shown in Figure 2. Therefore, the stock solutions of cosmetics A, B and C preferably include separate ingredients respectively different in characteristic. Such stock solutions of cosmetics are manufactured in a cosmetics factory.

Several kinds of testing solutions having different compounding ratios are prepared so as to locate at a certain distance in a map showing the interrelation. These testing solutions may be prepared either in the cosmetics factory or in each store having a preparing apparatus. A consumer can test each testing solution (not necessarily required to test all of the solutions) to estimate into several stages the feeling and taste for it. The consumer determines a compounding ratio of the stock solutions of cosmetics, which the consumer thinks is suitable for him or her, considering variation of a function and characteristic in the interrelation map. It is preferred that a consumer can refer an advice from a special advisor in determining the compounding ratio. The stock solutions of cosmetics are compounded in accordance with the compounding ratio and filled in a sales container. In addition, assignment of perfume (scent tone and/or concentration of perfume) corresponding to a taste of the consumer is determined, if required, and the perfumed solution is added to be compounded. An ingredient label is then attached to the sales container. Thus, the cosmetics are sold.

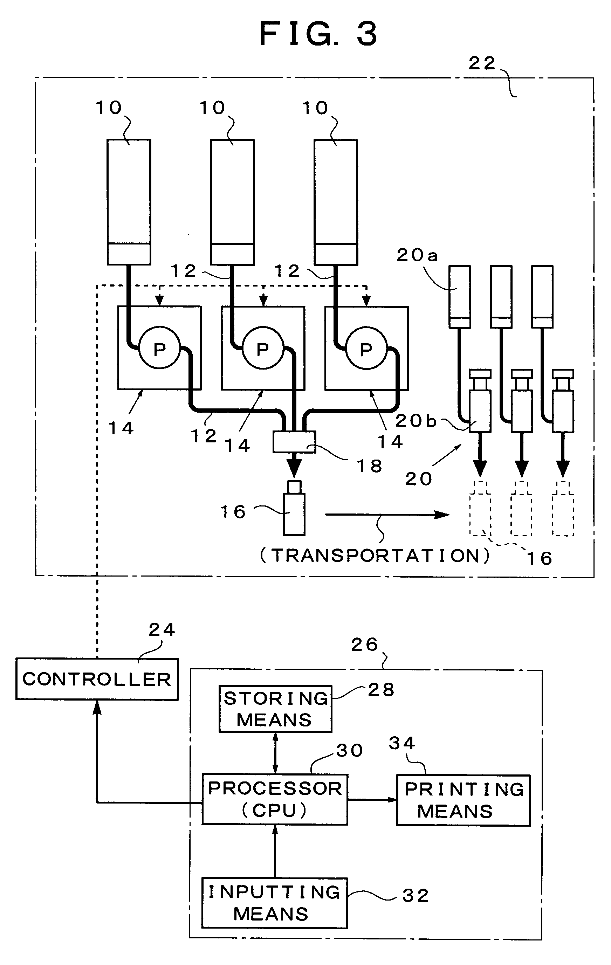

Figure 3 is a block diagram showing an example of an apparatus for preparing stock solutions of cosmetics according to the invention. The apparatus for preparing stock solutions of cosmetics comprises a plurality of (three, in this case) containers of a stock solution 10 for storing a stock solution of cosmetics, a tube-type of rotary quantitative filler pumps 14 respectively incorporated in stock solution supplying paths 12 from each container of a stock solution 10, a nozzle 18 for supplying solutions (solution supplying means) to a sales container 16 located on the downstream side of the quantitative filler pump 14, and a plurality of (three, in this case) perfumed solution quantitative injector devices 20. All of the above are incorporated in a clean bench 22. The number of units of the containers of a stock solution 10, the rotary quantitative filler pumps 14, and the perfumed solution quantitative injector devices 20 can be increased or decreased in accordance with the necessity. Flexicon's Peristaltic Pump PD121 (made by Flexicon a.s Company in Denmark), for example, is preferably used as the rotary quantitative filler pump. One solution supplying nozzle (solution supplying means) is used in common in this example, but it is possible to provide a solution supplying nozzle for every rotary quantitative filler pump so that the sales containers would be transported in order to be filled with stock solutions one after another. The stock solutions may be mixed in the manner of adding vibration after all the stock solutions are filled. The perfumed solution quantitative injector devices 20 preferably comprises a perfumed solution container 20a and a dividing injection cylinder 20b for dividing and injecting the perfumed solution. In Figure 3, a manual system is adopted for the perfumed solution quantitative injector device. The perfumed solution is filled in a barrel by pulling up a plunger, which is then depressed so that the solution would be divided and injected.

A controller 24 controls an operation of each rotary quantitative filler pump 14. A computer 26 is further used for supervising a whole system. The computer 26 comprises a storing means 28 for storing composition of ingredients of respective stock solutions of cosmetics (a memory or every kind of disc device), a processor (CPU) 30 for controlling an operation of the controller 24 as well as calculating the ingredient amount of raw materials of cosmetics included in accordance with a compounding ratio of stock solutions of cosmetics, inputting means (such as a keyboard, a ten key, or a barcode reader) 32 for indicating a compounding ratio of stock solutions of cosmetics, and a printing means (such as a label printer) 34 for printing a label indicating included ingredients of raw materials of cosmetics in order from the larger amount. The processor 30 executes a program stored in the storing means 28. A function to check inputted information of a compounding ratio of stock solutions of cosmetics and information of a barcode read from the label and to report its result may be added to the processor 30, if necessary.

When a tube (silicon tube, for example)-type of rotary quantitative filler pumps are used for supplying a stock solution of cosmetics as described above, the stock solutions contact only to the inner wall of the tube, which requires no cleaning operation, so that a predetermined amount of each stock solution can be accurately metered. When it is assumed that the total amount of a product is about 100 ml, respective stock solutions, whose composition amount is even 1.0 ml, can be compounded at an accuracy of around 0.1 ml, although the composition is sometimes influenced by the viscosity of a compounded stock solution. It is preferred, however, to carry out the composition around every 10 %, that is, by 10 ml in the case that the whole amount is 100 ml, in order to avoid increasing choice. Stock solutions are manufactured under an aseptic environment and filled in clean containers for stock solutions, so that microbe contamination can be avoided by mixing of the stock solutions on a clean bench or in a clean room. Such metering and supplying method may be applicable not only to aqueous solutions but also to emulsions or suspensions, which can be sufficiently transported in the case of having 500 centistokes or less of viscosity. Thus, the above metering and supplying method can be applied to solutions having a somewhat viscosity.

Furthermore, the ultimate product can be obtained by adding a desired perfumed solution (kind and concentration) to a stock solution having a compounding ratio, which, its consumer considers, is most suitable for her or his skin condition and taste. In the preparing apparatus shown in Figure 3, it is arranged that the sales container of stock solutions be transported just below the quantitative injector device of a selected perfumed solution after the stock solutions are compounded, and a predetermined perfumed solution is injected into the sales container. Of course, the quantitative injector device of a perfumed solution in Figure 3 may be automatized so that an operation of selecting and injecting a perfumed solution can be automatically carried out.

The system shown in Figure 3 is arranged such that the computer directly controls the controller. It is also possible, however, to arrange the system so that the controller would be separated from the computer (and thereby, they can be installed separately) by assigning a certain function to the controller. In this case, a barcode reader, for example, is provided on the controller side so as to be able to mechanically read out information described on a label, while the computer is mainly used for inputting and controlling information (such as customer data and raw material data), calculating ingredients, and printing labels. A printed label is attached on a predetermined place of a sales container and information necessary to prepare cosmetics, which is described on the label, (the kind and a compounding ratio of stock solutions and the kind and the amount of perfumes) is read by a barcode reader of the controller, so that the filling amount of respective stock solutions can be controlled and the preparing operation can be performed.

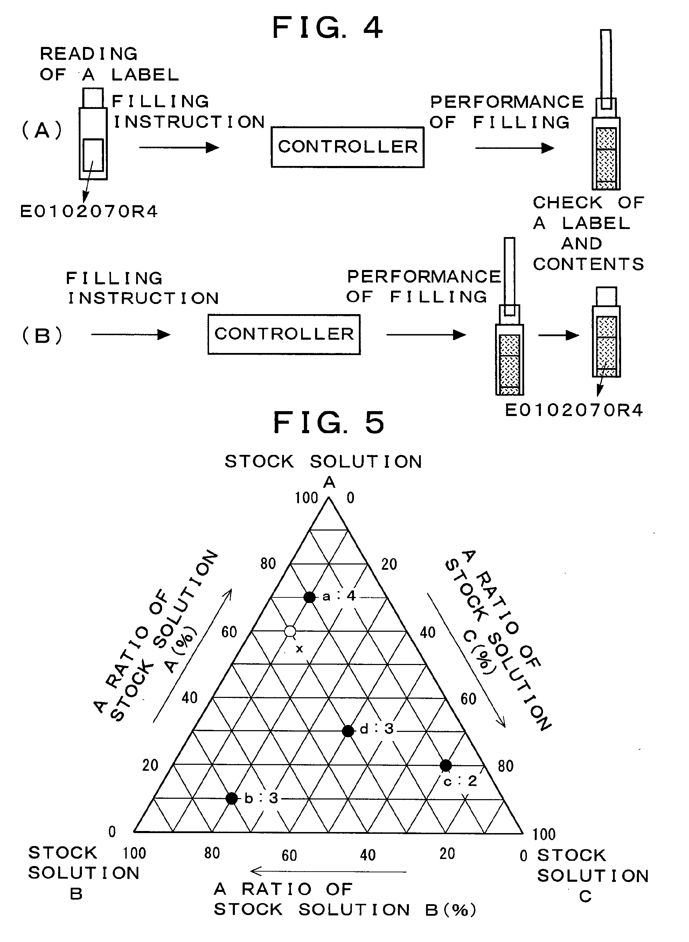

In the preparing operation, it should be checked just before starting or just after completing the preparation whether or not the label indication is the same as the contents. In Figure 4A, necessary information is read out from a sales container with a label attached and it is used as a filling instruction to the controller so as to perform a filling operation. In Figure 4B, a filling operation is carried out in accordance with a filling instruction to the controller, necessary information is read out from a sales container with a label attached, and then, the label indication and the filling instruction are checked. Thus, the label indication can be checked whether it is the same as the contents or not, and accordingly, an error in preparation can be prevented form occurring.

Such preparing apparatus can be installed in a retailed store requiring such apparatus since it can be downsized, so that it would be possible to prepare and sell immediately a desired product in accordance with requirements from a customer. Even in the case of a store in which the apparatus is not installed, the compounding ratio of stock solutions of cosmetics can be determined in accordance with a taste of a customer if only several kinds of testing solutions are prepared. It would be possible to send for a product from a store with the preparing apparatus or from a factory of stock solutions by designating the compounding ratio of the necessary stock solutions. A sale through mail order or the Internet would be also possible by means of testing solutions. Especially in an Internet sale, a taste of a consumer for respective testing solutions is inputted on a screen by answering questions in a simulated face-to-face sales manner, so that a preferred compounding ratio of stock solutions would be automatically calculated in accordance with a program and so that acceptance of an order, preparation, and shipment can be performed in a series of operation. In addition, the contents of an order once accepted can be controlled on the basis of data such as identification marks or preparation date. After the second order, mail order and/or Internet sale would be possible by designating the above data. When each preparing apparatus is used as a terminal to be connected with a head quarter (a factory of stock solutions, for example) via a communication network, it would be possible to unify customer management and control of stock solutions.

### EXAMPLE

In preparing a moisturizing cosmetic formula, three kinds of stock solutions (stock solutions A, B and C) including individually a characteristic moisturizing ingredient are prepared in accordance with the following prescription. A main moisturizer of the stock solution A is hyaluronic acid of acid mucopolysaccharide, which is a main element of the derm; that of the stock solution B is atherocollagen, in which protein collagen existing widely in a body of animal such as a skin is treated so as to become water-soluble; and that of the stock solution C is seaweed essence (alginic acid) extracted from seaweeds. Ratios of ingredients of the respective stock solutions A, B and C are shown in Table 1.

**[Table 1]**

| No. | Name of Component | Undiluted Solution A (Quantity %) | Undiluted Solution B (Quantity %) | Undiluted Solution C (Quantity %) |
|---|---|---|---|---|
| 1 | Hyaluronic acid (1%) | 30.000 | - | - |
| 2 | Succinyl atherocollagen SS (2%) | - | 10.000 | - |
| 3 | Seaweed essence | - | - | 0.300 |
| 4 | Glycerin | 15.000 | 8.000 | 8.000 |
| 5 | 1,3-butylene glycol | 7.000 | - | - |
| 6 | Propylene glycol | - | 7.000 | 10.000 |
| 7 | Diglycerin | 3.000 | - | - |
| 8 | L-hydroxyproline | 0.500 | - | 2.000 |
| 9 | Sodium pyrroiidonecarboxy-late | - | 0.500 | 1.000 |
| 10 | Erythritol | - | 2.000 | - |
| 11 | Methylparaben | 0.100 | 0.100 | 0.100 |
| 12 | Purified water | 44.400 | 72.400 | 78.600 |
| | Total | 100.000 | 100.000 | 100.000 |

Polyhydric alcohols such as glycerin, propylene glycol, 1,3-butylene glycol, and diglycerin, erythritol being sugar alcohol, and L-hydroxyproline being amino acid are all known as a moisturizing ingredient, which are compounded so as to assist the aforementioned main ingredients and to give a feeling of fit in the skin, and can vary within an optional range. The three kinds of stock solutions accordingly prepared are all intended to be a moisturizer, but give respectively different feelings when applied to the skin. The stock solution A shows an effect of moisturizing, which is maintained comparatively long after applied; the stock solution B gives a feeling of thick application on the skin; and the stock solution C is spread well on the skin and gives a comparatively light feeling.

Several kinds of testing solutions, in which the stock solutions A, B and C are compounded at a different compounding ratios, are prepared for a consumer so that he or she can test the solutions and select one suitable for his or her taste among them, and then, a compounding ratio of the three kinds of stock solutions, which is optimal for a taste of the consumer, can be determined in accordance with the estimation for the selected testing solution.

For example, as shown in Figure 5, the following four kinds of testing solutions are used for the test:
Testing solution a --- Stock solution A: 70 %, Stock solution B: 20 %, Stock solution C: 10 %;
Testing solution b --- Stock solution A: 10 %, Stock solution B: 70 %, Stock solution C: 20 %;
Testing solution c --- Stock solution A: 20 %, Stock solution B: 10 %, Stock solution C: 70 %; and
Testing solution d --- Stock solution A: 30 %, Stock solution B: 30 %, Stock solution C: 40 %.

As a result, in five steps estimation, when the testing solution a gets Point 4; the testing solution b gets Pint 3; the testing solution c gets Point 2; and the testing solution d gets Point 3, wherein Point 1 denotes not preferring; Point 2 denotes not preferring much; Point 3 denotes average; Point 4 denotes preferring a little; and Point 5 denotes preferring, the preferred compounding ratio would be close to that of the testing solution a such that a large amount of the stock solution A, a little bit large amount of the stock solution B, and a little bit small amount of the stock solution C would be compounded. The compounding ratio satisfying such condition is in a certain range in Figure 5. In this range, a compounding ratio of:
the stock solution A: 60 %, the stock solution B: 30 %, and
the stock solution C: 10%
(which is shown as a mark x in Figure 5) can be considered most acceptable for a product.

Further, three kinds of perfumed solutions, that is, the perfumed solutions having rose, lavender, and gerbera, for example, as scent tone of perfume are prepared. The ratio of the included amount of perfume and solubilizer of these perfumed solutions are prepared so that the standard smell would be 1 % of the perfume assignment ratio. The consumer can select a preferred perfumed solution as well as its perfume assignment ratio among a half of the standard, the standard, 1.5 times as much as the standard, and twice as much as the standard, for example. This means that a consumer can select one among twelve kinds of different perfumes in this case. When preparing more kinds of perfumed solutions, a selection range would be significantly widened, while no perfume may be added so as to produce a so-called fragrance-free product.

As a result, preparation can be easily achieved in response to a consumer's request either in the first case that the consumer selects 50 % of the stock solution A, 30 % of the stock solution B, the 20 % of the stock solution C and the standard concentration of rose perfume, or in the second case that the consumer selects 30 % of the stock solution A, 20 % of the stock solution B, the 50 % of the stock solution C and 1.5 times as much as the standard concentration of lavender perfume.

In the above cases, the indication of all ingredients necessary for cosmetics at the above compounding ratios in order of the amount of the ingredients is as follows:
First case: purified water, glycerin, propylene glycol, butylene glycol, diglycerin, hydroxyproline, sodium pyrrolidonecarboxylate, erythritol, sodium hyaluronate, methyl paraben, succinyl atherocollagen, seaweed essence, (disodium hydrogenphosphate, potassium dihydrogenphosphate, ethanol, PEG-60, PEG-50, perfume); and
Second case: purified water, glycerin, propylene glycol, hydroxyproline, butylene glycol, diglycerin, erythritol, sodium pyrrolidonecarboxylate, seaweed essence, methyl paraben, sodium hyaluronate, succinyl atherocollagen, (disodium hydrogenphosphate, potassium dihydrogenphosphate, ethanol, PEG-60, PEG-50, perfume).

The ingredients in a bracket in the first and second cases are originally included in raw materials. Disodium hydrogenphosphate and potassium dihydrogenphosphate are added in producing 2 % of succinyl atherocollagen solution, while ethanol, PEG-60, PEG-50 and perfume are taken over by a perfumed solution.

In comparing the both cases, there are differences such that hydroxyproline takes sixth place in the first case whereas it takes fourth place in the second case, and that sodium hyaluronate is before seaweed essence in the first case whereas the seaweed essence takes ninth place and the sodium hyaluronate takes eleventh place in the second case. It is possible, however, to calculate a compounding ratio of a product by a processor (CPU) on the basis of inputted compounding ratio of the stock solutions so that the compounding ratio of a product would be outputted and printed on a label in order from the larger amount of ingredient, since the ingredient ratio of each stock solution is stored in advance in the storing means of a computer. In printing, other necessary information such as name of a consumer, identification mark, and date of preparation can be also printed on a label at the same time.

It is possible to increase the number of kinds of the stock solutions to four or five, for example, as described before, although it is three in the above embodiment. For example, four or five kinds of stock solutions are prepared so that any compounding ratio can be selected, while it is also possible to select any two or three kinds among four or five kinds of stock solutions so that the compounding ratio of the selected solutions would be selected as the above embodiment. Moreover, adding a certain amount (5 ml, 10 ml or 100 ml, for example) of a raw material solution (5 % of aqueous dispersion solution of ceramide, for example) having a characteristic of comparatively high concentration as well as adding a perfumed solution to the above compounded solution can provide cosmetics in which the above characteristic is much significant.

As described above, the present invention relates to a method for compounding and preparing a plurality of stock solutions having been manufactured in advance in accordance with an aptitude of a consumer so as to be filled in a sales container and sold. According to the invention, it is possible to rapidly and easily preparing and selling cosmetics suitable for respective skin conditions, feelings and tastes of consumers.

According to the invention, a product compounded and prepared in accordance with a consumer's instruction can be delivered to the consumer immediately or within a few days even in the case of mail order or Internet sale. Thus, comparing with the conventional manufacturing-sale manner on the basis of a process of factory production (stocks) - distribution (stocks) - store (stocks), a period until the products are completely consumed can be remarkably shortened. Accordingly, it is possible to achieve an aseptic operation by a closed system in compounding and preparing a solution and thereby to minimize addition of a disinfectant, an antiseptic, an oxidation preventive and a stabilizer, which enables the cosmetics to be kind to the skin.

## Claims

1. A method for preparing and selling liquid cosmetics in a custom-made manner, comprising the steps of:
manufacturing in advance plural kinds of stock solutions of cosmetics, which respectively include a plurality of ingredients of raw materials of cosmetics and which have different functions or characteristics;
storing the plural kinds of stock solutions of cosmetics in containers of respective stock solutions;
controlling a quantitative filler to meter the amount of the stock solutions of cosmetics at a compounding ratio requested by a consumer from the respective containers for stock solutions and filling sales containers with the metered solutions;
attaching a label indicating ingredients corresponding to the compounding ratio; and
selling the product.

2. The method for preparing and selling liquid cosmetics in a custom-made manner according to Claim 1, wherein a plurality of testing solutions having different compounding ratios of stock solutions of cosmetics are prepared for determining a compounding ratio suitable for a taste of a consumer on the basis of estimation for the testing solutions of the consumer.

3. The method for preparing and selling liquid cosmetics in a custom-made manner according to Claim 1 or 2, wherein a perfumed solution suitable for a taste of a consumer is selected by the consumer among perfumed solutions having plural kinds of scent tone and/or concentrations of perfume so that the selected perfumed solution is added.

4. An apparatus for preparing liquid cosmetics in a custom-made manner, comprising:
a plurality of containers of stock solutions for storing stock solutions of cosmetics having different functions or characteristics;
a tube-type rotary quantitative filler pumps respectively incorporated in a path for supplying a stock solution from each container of stock solution;
a solution supplier located on a downstream side of the quantitative filler pumps for supplying a solution to a sales container;
a controller for controlling an operation of respective quantitative filler pumps; and a computer supervising a system as a whole,
wherein the computer comprises: a storing unit for storing the composition of ingredients of respective stock solutions of cosmetics; a processor for calculating the amount of ingredients of raw materials of cosmetics to be included in accordance with a compounding ratio of stock solutions of cosmetics; an inputting unit for indicating a compounding ratio of stock solutions of cosmetics; and a printing unit for printing a label indicating included ingredients of raw materials of cosmetics in order from a larger amount, and
wherein at least the containers of a stock solution, the rotary quantitative filler pumps and the solution supplier are installed in a clean space.
